# EUROPEAN PATENT SPECIFICATION

(11) **EP 1 762 632 B1**
(45) Date of publication and mention of the grant of the patent: **25.05.2011**
(21) Application number: 06729656.6
(22) Date of filing: 22.03.2006
(51) Int. Cl.: H01F 1/057, H01F 1/058, H01F 41/02, C22C 38/00, B22D 11/06, B22F 3/00, B22F 9/08, C21D 6/00, C22C 1/04, C22C 19/00, C22C 33/02

(54) **IRON-BASED RARE-EARTH-CONTAINING NANOCOMPOSITE MAGNET AND PROCESS FOR PRODUCING THE SAME**
SELTENE ERDEN ENTHALTENDER NANOKOMPOSIT-MAGNET AUF EISENBASIS UND VERFAHREN ZU DESSEN HERSTELLUNG
AIMANT NANOCOMPOSITE A BASE DE FER CONTENANT UNE TERRE RARE ET SON PROCEDE DE FABRICATION

(30) Priority: 24.03.2005 JP 2005086826
(43) Date of publication of application: 14.03.2007
(73) Proprietor: Hitachi Metals, Ltd., Minato-ku Tokyo 105-8614 (JP)
(72) Inventor: KANEKIYO, Hirokazu, Kyoto-shi, Kyoto 6101152 (JP); HIROSAWA, Satoshi, Otsu-shi Shiga 5200221 (JP); MIYOSHI, Toshio, Mishima-gun Osaka 6180011 (JP)
(74) Representative: Grünecker, Kinkeldey, Stockmair & Schwanhäusser Anwaltssozietät
(86) International application number: PCT/JP2006/305689
(87) International publication number: WO 2006/101117

(56) References cited:
- EP-A- 1 158 545
- JP-A- 07 122 412
- JP-A- 10 053 844
- JP-A- 11 008 109
- JP-A- 2001 271 145
- JP-A- 2002 015 907
- JP-A- 2003 320 442
- US-A- 5 803 992
- US-A1- 2004 020 569
- US-A1- 2005 040 923

## Description

### TECHNICAL FIELD

The present invention relates to an iron-based rare-earth nanocomposite magnet, including an Nd₂Fe₁₄B phase and an α -Fe phase in the same metal structure, and a method for producing such a magnet.

### BACKGROUND ART

EP-A-1 158 545 discloses a rare-earth nanocomposite magnet, of which the soft magnetic phases consist mostly of an iron-based boride phase. According to this prior art, the addition of Ti can control the nucleation and growth of the α-Fe phase and can make the Nd₂Fe₁₄B phase nucleate and grow preferentially while the molten alloy is being quenched. As a result, a nanocomposite magnet, in which the Nd₂Fe₁₄B phase with a very small size, the iron-based boride phase and the α-Fe phase are distributed uniformly, can be obtained. This prior art in particular discloses iron based rare earth nanocomposite magnet having a composition represented by the general formula (Fe₁₋ₘTₘ)_{100-x-y-z}QₓR_{y}M_{z}, where T is at least one element selected from the group consisting of Co and Ni; Q is at least one element selected from the group consisting of B and C; R is at least one rare earth element substantially excluding La and Ce; and M is at least one metal element selected from the group consisting of Ti, Zr and Hf and always includes Ti. In this formula, the mole fractions x, y, z and m meet the inequalities of: 10 at% <x≤ 20 at%; 6 at% ≤y< 10 at%; 0,1 at% ≤z≤ 12 at%; and 0 ≤m≤ 0,5, respectively. This prior art discloses a method for producing an iron based alloy permanent magnet, exhibiting excellent magnetic properties including a high coercivity H_{cJ} of i.e. 480 kA/m or more and a high remanence Bᵣ for example 0,85 T or more, at a low cost, in which the microcrystalline R₂Fe₁₄B and amorphous phases coexist, at the low cooling rate between about 10²°C/s to about 10⁵°C/s.

US 2005/0040923 A1 discloses a nanocomposite magnet having a composition represented by the general formula: (Fe₁₋ₘTₘ)_{100-x-y-z-w-n}(B₁₋ₚCₚ)ₓR_{y}Ti_{z}V_{w}Mₙ, where T is at least one element selected from the group consisting of Co and Ni; R is a rare-earth element; and M is at least one element selected from the group consisting of Al, Si, Cr, Mn, Cu, Zn, Ga, Nb, Zr, Mo, Ag, Ta and W. The mole fractions x, y, z, w, n, m and p have to satisfy the inequalities of: 10 at% <x≤15 at%; 4 at% ≤y< 7 at%; 0,5 at% ≤z≤ 8 at%; 0,01 at% ≤w≤ 6 at%; 0 at% ≤n≤ 10 at%; 0 ≤m≤ 0.5; and 0.01 ≤p≤ 0,5, respectively. The magnet is produced at a low cooling rate of about 10²°C/s to about 10²°C/s to obtain a rapidly solidified alloy, in which the R₂Fe₁₄B type crystalline phase and amorphous phase coexist.

US 2004/0020569 A1 discloses an iron based rare earth alloy nanocomposite magnet having a composition represented by the general formula (Fe₁₋ₘTₘ)_{100-x-y- z}QₓR_{y}Ti_{z}, where T is at least one element selected from the group consisting of Co and Ni, Q is at least one element selected from the group consisting of B and C, and R is at least one rare earth element including substantially no La or Ce. Hereby the mole fractions x, y, z and m have to satisfy the inequalities of: 10 at%<x≤17 at%; 7 at%≤y<10 at%; 0,5 at%≤z≤6 at%; and 0≤m≤0,5, respectively. This composition is melted and solidified with a cooling rate of about 10²°C/s to about 10⁴°C/s to obtain an alloy in which crystalline R₂Fe₁₄B and amorphous phases coexist.

A nanocomposite permanent magnet, including a hard magnetic phase such as an Nd₂Fe₁₄B phase with a very small size of a nanometer scale and soft magnetic phases such as an iron-based boride and α-Fe in the same metal structure (which will be referred to herein as a "nanocomposite magnet"), is currently under development. In a nanocomposite magnet, crystal grains are magnetically coupled together via exchange interactions and exhibit excellent magnet performance.

In the field of electronic products including small-sized motors and sensors, magnets with high remanence are in high demand. To increase the remanence of a nanocomposite magnet to meet this demand, it is effective to increase the percentage of the a -Fe phase to the overall nanocomposite magnet. This is because since the saturation magnetization of the α -Fe phase is higher than that of the Nd₂Fe₁₄B phase or that of the iron-based boride phase, the increase in the percentage of the α -Fe phase to the nanocomposite magnet means that the overall magnet will have increased remanence.

Japanese Patent Application Laid-Open Publication No.8-162312 and Japanese Patent Application Laid-Open Publication No. 10-53844 disclose α-Fe based nanocomposite magnets. In these nanocomposite magnets, most of their soft magnetic phases is α -Fe. That is why these nanocomposite magnets are expected to achieve a high remanence of 0.9 T or more. However, the conventional α -Fe based nanocomposite magnets have a coercivity of 400 kA/m or less, which is too low to use them in actual products.

Japanese Patent Application Laid-Open Publication No. 2003-178908 Patent Document No. 4 discloses a rare-earth nanocomposite magnet, of which the soft magnetic phase consists essentially of an iron-based boride phase, and teaches that by adding Ti and C (carbon) to such a rare-earth nanocomposite magnet, of which the soft magnetic phase consists mostly of the iron-based boride phase, the following effects are achieved:

1. The liquidus temperature of a molten alloy decreases by 5 °C or more (e.g., approximately 10 to 40 °C). When the liquidus temperature of the molten alloy decreases due to the addition of carbon, the viscosity of the melt hardly increases even when the temperature of the melt is decreased. This is because the crystallization of TiB₂ and other compounds with an excessive large grain size is minimized. As a result, a stabilized melt flow can be formed continuously while the molten alloy is being quenched;

2. If the temperature of the melt can be decreased, the melt can be quenched sufficiently on the surface of the chill roller. Consequently, the resultant rapidly solidified alloy will be wound around the roller much less frequently and will have a uniform and fine structure;

3. By adding Ti, even an alloy including (B+C) at a high concentration and having high amorphous phase forming ability can be quenched at a relatively low quenching rate of about 10² °C/s to about 10⁴ °C /s . As a result, a rapidly solidified alloy including 60 vol% or more of Nd₂Fe₁₄B phase can be formed without allowing α-Fe to grow excessively.

### DISCLOSURE OF INVENTION

### PROBLEMS TO BE SOLVED BY THE INVENTION

A Ti-containing nanocomposite magnet, of which the soft magnetic phase consists mostly of an iron-based boride, has a very high coercivity of about 500 kA/m to about 1,000 kA/m but a remanence of only about 0.9 T. To increase the remanence, a nanocomposite structure, of which the soft magnetic phase includes a lot of α -Fe as a main phase, not the iron-based boride, should be obtained.

The present inventors thought that the addition of Ti would also increase the coercivity of even such a rare-earth nanocomposite magnet including a -Fe as a main soft magnetic phase. However, the present inventors discovered that just by adding Ti to a conventional composition, which was known to produce α -Fe as a soft magnetic phase in most cases, high coercivity and high remanence could not be achieved at the same time.

In order to overcome the problems described above, a primary object of the present invention is to provide an iron-based rare-earth nanocomposite magnet that exhibits permanent magnet properties including a remanence Bᵣ of 0.9 T or more, a maximum energy product (BH)ₘₐₓ of 110 kJ/m³ or more, and a coercivity H_{cJ} of 400 kA/m or more.

### MEANS TO SOLVE THE PROBLEMS

An iron-based rare-earth nanocomposite magnet according to the present invention includes an Nd₂Fe₁₄B phase and an α-Fe phase and has a composition represented by the compositional formula: T_{100-x-y-z-n}(B_{1-q}C_{q})ₓR_{y}Ti_{z}Mₙ, where T is at least one transition metal element selected from the group consisting of Fe, Co and Ni and always including Fe, R is at least one rare-earth element including substantially no La or Ce, and M is at least one metal element selected from the group consisting of Al, Si, V, Cr, Mn, Cu, Zn, Ga, Zr, Nb, Mo, Ag, Hf, Ta, W, Pt, Au and Pb, and the mole fractions x, y, z, n and q satisfy the inequalities of: 4 at%≦x≦10 at%, 6 at%≦y≦10 at%, 0.05 at%≦ z ≦ 5 at%, 0 at%≦n≦10 at%, and 0.05≦q≦0.5, respectively. The magnet includes 5 vol% to 60 vol% of α-Fe phase with an average crystal grain size of 1 nm to 50 nm and 40 vol% to 90 vol% of Nd₂Fe₁₄B phase with an average crystal grain size of 5 nm to 100 nm. A non-magnetic phase including at least Ti and C (carbon) is present on the grain boundary between the α-Fe and Nd₂Fe₁₄B phases.

In one preferred embodiment, the α-Fe phase with the average crystal grain size of 1 nm to 50 nm has a crystal grain size standard deviation of 10 nm or less and the Nd₂Fe₁₄B phase with the average crystal grain size of 5 nm to 100 nm has a crystal grain size standard deviation of 15 nm or less.

In another preferred embodiment, the magnet exhibits permanent magnet properties including a remanence Bᵣ of 0.9 T or more, a maximum energy product (BH)ₘₐₓ of 120 kJ/m³ or more, and a coercivity H_{cJ} of 400 kA/m or more.

An iron-based rare-earth nanocomposite magnet producing method according to the present invention is a method for producing an iron-based rare-earth nanocomposite magnet that includes an Nd₂Fe₁₄B phase and an α-Fe phase. The method includes the steps of: preparing a melt of an alloy that has a composition represented by the compositional formula : T_{100-x-y-z-n}(B_{1-q}C_{q})ₓR_{y}Ti_{z}Mₙ, where T is at least one transition metal element selected from the group consisting of Fe, Co and Ni and always including Fe, R is at least one rare-earth element including substantially no La or Ce, and M is at least one metal element selected from the group consisting of Al, Si, V, Cr, Mn, Cu, Zn, Ga, Zr, Nb, Mo, Ag, Hf, Ta, W, Pt, Au and Pb, and the mole fractions x, y, z, n and q satisfy the inequalities of: 4 at%≦x≦10 at%, 6 at%≦y ≦10 at%, 0.05 at%≦z≦5 at%, 0 at%≦n≦10 at%, and 0.05≦q≦ 0.5, respectively; and quenching the melt at a quenching rate of 5 × 10³ °C/s to 5 × 10⁷ °C/s, thereby making a rapidly solidified alloy, which includes at least 10% of crystalline phases including the Nd₂Fe₁₄B phase and the α-Fe phase and having an average crystal grain size of 100 nm or less and an amorphous phase as the balance.

In one preferred embodiment, the method further includes the step of thermally treating and crystallizing the rapidly solidified alloy by heating the alloy to a temperature of 500 °C to 800 °C at a rate of 0.5 °C/s to 7 °C /s after the step of quenching the melt has been performed.

In another preferred embodiment, the method further includes the step of pulverizing the rapidly solidified alloy after the step of quenching the melt has been performed.

In still another preferred embodiment, the alloy satisfies 8 at%≦y≦10 at%.

A method for producing a resin bonded permanent magnet according to the present invention includes the steps of: preparing a magnet powder by the method described above; and adding a resin binder to the magnet powder and molding the powder and the binder.

### EFFECT OF INVENTION

According to the present invention, by adding an appropriate amount of C (carbon) to the material alloy and controlling the quenching rate of the molten alloy within a limited range, a non-magnetic phase including at least Ti and C (carbon) is present on the grain boundary between the α-Fe and Nd₂Fe₁₄B phases, and the exchange interactions between the α-Fe phases (or iron-based boride phases) and the Nd₂Fe₁₄B phases and those between the Nd₂Fe₁₄B phases themselves can be reduced appropriately. As a result, high coercivity, which couldn't be achieved by a conventional α -Fe based nanocomposite magnet, is realized according to the present invention. In addition, since its soft magnetic phase consists mostly of α -Fe phase, a high remanence Bᵣ is achieved, too.

### BRIEF DESCRIPTION OF DRAWINGS

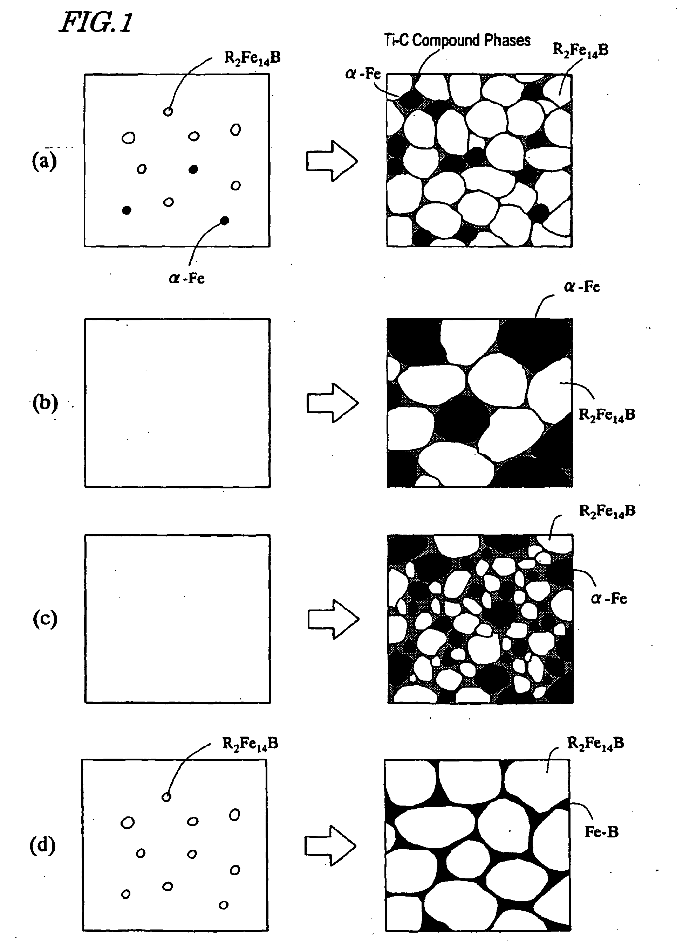

Portions (a) through (d) of FIG. 1 schematically illustrate the structures of nanocomposite magnets.

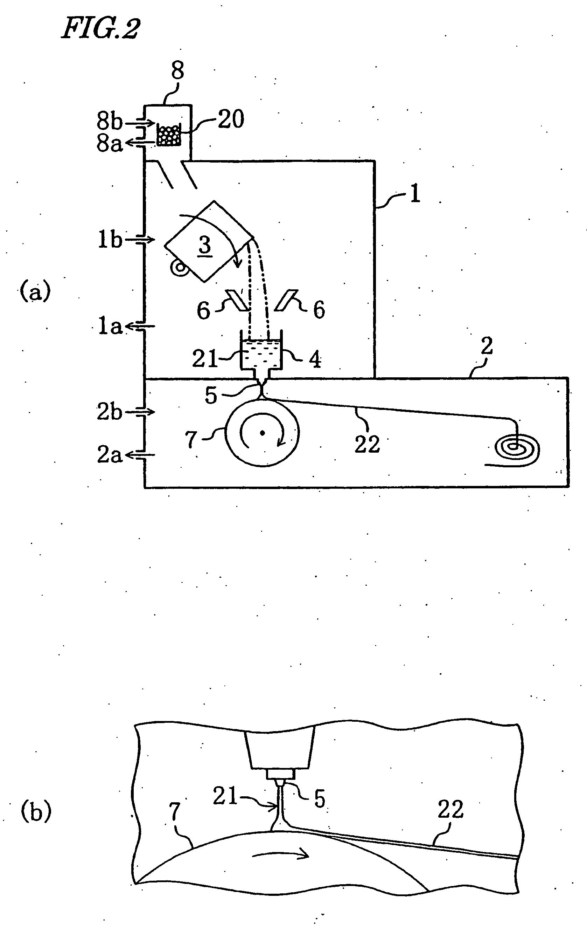

FIG. 2(a) is a cross-sectional view illustrating an overall arrangement for a machine for use in a process of making a rapidly solidified alloy for the iron-based rare-earth alloy nanocomposite magnet of the present invention and 2(b) illustrates part of the machine, where a melt is quenched and rapidly solidified, on a larger scale.

### DESCRIPTION OF REFERENCE NUMERALS

- 1b, 2b, and 8b: atmospheric gas inlet port
- 1a, 2a, and 8a: gas outlet port
- 1: melting chamber
- 2: quenching chamber
- 3: melting crucible
- 4: reservoir
- 5: teeming nozzle
- 6: funnel
- 7: rotating chill roller
- 21: melt
- 22: alloy thin strip

### BEST MODE FOR CARRYING OUT THE INVENTION

The present inventors discovered and confirmed via experiments that if the quenching rate of a molten alloy was controlled within a particular range and if B (boron) in the rapidly solidified alloy was partially replaced with C (carbon) while a rare-earth nanocomposite magnet, of which the soft magnetic phase consisted mostly of a -Fe, was being produced by a melt-quenching process, an iron-based rare-earth nanocomposite magnet, exhibiting permanent magnet properties including a remanence Bᵣ of 0.9 T or more, a maximum energy product (BH)ₘₐₓ of 110 kJ/m³ or more, and a coercivity H_{cJ} of 400 kA/m or more, could be obtained. Also, when a resin bonded isotropic bonded magnet was produced by pulverizing such a nanocomposite magnet, the resultant remanence Bᵣ was as high as 0.6 T or more.

An iron-based rare-earth nanocomposite magnet according to the present invention includes an Nd₂Fe₁₄B phase and an α -Fe phase and has a composition represented by the compositional formula: T_{100-x-y-z-n}(B_{1-q}-C_{q})ₓR_{y}Ti_{z}Mₙ, where T is at least one transition metal element selected from the group consisting of Fe, Co and Ni and always including Fe, R is at least one rare-earth element including substantially no La or Ce, and M is at least one metal element selected from the group consisting of Al, Si, V, Cr, Mn, Cu, Zn, Ga, Zr, Nb, Mo, Ag, Hf, Ta, W, Pt, Au and Pb, and the mole fractions x, y, z, n and q satisfy the inequalities of: 4 at%≦x≦10 at%, 6 at%≦y≦10 at%, 0.05 at%≦z≦5 at%, 0 at%≦n≦10 at%, and 0.05≦q≦0.5, respectively

Part or all of Nd in the Nd₂Fe₁₄B-type crystals may be replaced with another rare-earth element and Fe in the Nd₂Fe₁₄B-type crystals may be partially replaced with another transition metal element such as Ni or Co. Also, according to the present invention, B in the Nd₂Fe₁₄B-type crystals may be replaced with C (carbon). Thus, in the following description and claims of the present application, all of those crystals, of which at least one of the elements has been replaced with these elements, will be referred to herein as "Nd₂Fe₁₄B phases" collectively.

To make a nanocomposite magnet according to the present invention, first, a melt of a material alloy with the composition described above is prepared. Next, the melt is quenched at a quenching rate of 5 × 10³ °C/s to 5 × 10⁷ °C /s, thereby making a rapidly solidified alloy including at least 10% of crystalline phases that include Nd₂Fe₁₄B phases and α - Fe phases and have an average crystal grain size of 100 nm or less and amorphous phases as the balance (i.e., melt-quenching process).

In this manner, according to the present invention, an appropriate amount of C (carbon) is added to the material alloy and the quenching rate of the molten alloy is controlled within a limited range. As a result, the magnetic properties improve because the effects achieved by adding C and those achieved by controlling the quenching rate enhance each other. It is not quite clear at this time exactly how the magnetic properties are improved. At any rate, according to the results of observation, the nanocomposite magnet of the present invention was found to have a nanocrystalline structure including 5 vol% to 60 vol% of α -Fe phase with an average crystal grain size of 1 nm to 50 nm and 40 vol% to 90 vol% of Nd₂Fe₁₄B phase with an average crystal grain size of 5 nm to 100 nm.

the thickness of the crystal grain boundary between the α -Fe phases and the Nd₂Fe₁₄B phases was too small (10 nm or less) to identify the compound that was present on the grain boundary. However, the presence of a compound including Ti at an increased concentration was confirmed on the grain boundary. Such a compound includes at least Ti and C and is non-magnetic. Due to the presence of such a non-magnetic compound on the crystal grain boundary, the exchange interactions between the α -Fe phases (or iron-based boride phases) and the Nd₂Fe₁₄B phases or those between the Nd₂Fe₁₄B phases themselves can be reduced appropriately and therefore good magnetic properties would be achieved.

Hereinafter, the difference in structure between the nanocomposite magnet of the present invention and the conventional nanocomposite magnet will be described with reference to FIG. 1.

The rectangular areas on the left-hand side of portions (a) through (d) of FIG. 1 schematically illustrate the nanocrystalline structures of rapidly solidified alloys, while those on their right-hand side schematically illustrate the nanocrystalline structures of thermally treated nanocomposite magnets.

More specifically, portions (a) through (d) of FIG. 1 illustrate a nanocomposite magnet according to the present invention, a conventional α -Fe/R₂Fe₁₄B based nanocomposite magnet, a conventional α -Fe/R₂Fe₁₄B based nanocomposite magnet including an additive Ti, and an iron-based boride/R₂Fe₁₄B based nanocomposite magnet including an additive Ti, respectively.

According to the present invention, a rapidly solidified alloy structure in which α -Fe phases and R₂Fe₁₄B-type compound phases of very small sizes are dispersed in amorphous phases can be obtained as shown in portion (a) of FIG. 1. Since at least 5% of B is replaced with C according to the present invention, the amorphous forming ability is lower than the situation where no C is added. That is why in the same melt-quenching rate range, crystalline phases crystallize more easily than the situation where no C is added. However, since crystalline phases crystallize relatively easily, even an α-Fe phase included in the rapidly solidified alloy will have its growth rate restricted during the subsequent heat treatment process by adding Ti. As a result, when the heat treatment process is finished, a structure, including R₂Fe₁₄B-type compound phases that have grown earlier and faster and α -Fe phases of a smaller size, can be obtained. Also, on the grain boundary between the α - Fe phases and the R₂Fe₁₄B-type compound phases, there are Ti-C compound phases including Ti and C at higher concentrations. This Ti-C compound is non magnetic. Due to the presence of this compound, the exchange interactions between the α -Fe phases (or iron-based boride phases) and the Nd₂Fe₁₄B phases and those between the Nd₂Fe₁₄B phases themselves are reduced appropriately, and therefore, the coercivity would be increased compared to the situation where there are no Ti-C compound phases. Furthermore, the rapidly solidified alloy of the present invention has such a structure in which the α -Fe phases and R₂Fe₁₄B-type compound phases of very small sizes are dispersed in the amorphous phases, and the effects achieved by adding C are also enhanced. Consequently, the nanocomposite magnet that has been thermally treated has a very uniform nanocrystalline structure in which the crystal grains of the α -Fe phase with an average crystal grain size of 1 nm to 50 nm have a standard deviation of 10 nm or less and the crystal grains of the Nd₂Fe₁₄B phase with an average crystal grain size of 5 nm to 100 nm have a standard deviation of 15 nm or less. As a result, the remanence Bᵣ and the loop squareness of the demagnetization curve have increased in the resultant magnet.

In the conventional α -Fe/R₂Fe₁₄B based nanocomposite magnet, the rapidly solidified alloy is almost totally amorphous as shown in portion (b) of FIG. 1. To make such a rapidly solidified alloy in an amorphous state, the melt-quenching rate should be as high as 1 × 10⁷ °C/s or more. When the heating process is finished, a structure in which R₂Fe₁₄B-type compound phases and α -Fe phases of almost the same size are present will be obtained. Such a structure cannot realize good magnetic properties.

It was reported that in the prior art, a metal element such as T1 should be added to the melt of a material alloy to reduce the sizes of the constituent phases of the nanocomposite magnet structure shown in portion (b) of FIG. 1. When such a metal element is added, a structure in which the sizes of the α-Fe phases (i.e., the black portions in portion (c) of FIG. 1) and the R₂Fe₁₄B - type compound phases (i.e., the white portions in portion (c) of FIG. 1) have been both reduced can be obtained as shown in portion (c) of FIG. 1 by controlling the conditions of the heat treatment process. In such a structure, the sizes of the α -Fe phases have been reduced but those of the R₂Fe₁₄B-type compound phases have been reduced, too. Thus, such a structure cannot realize good magnetic properties. Besides, since the rapidly solidified alloy is almost completely amorphous, the desired homogenous structure cannot be obtained even by subjecting such a rapidly solidified alloy to a heat treatment process.

In the iron-based boride/R₂Fe₁₄B based nanocomposite magnet including an additive Ti, not the α -Fe/R₂Fe₁₄B based nanocomposite magnet described above, R₂Fe₁₄B-type compound phases are produced in the rapidly solidified alloy as shown in portion (d) of FIG. 1. However, in the resultant structure, those R₂Fe₁₄B-type compound phases are surrounded by iron-based boride (Fe-B) phases thinly.

In the conventional α -Fe/R₂Fe₁₄B based nanocomposite magnet, the size of the α -Fe phases cannot be made smaller than that of the R₂Fe₁₄H-type compound phases. Thus, the known α -Fe/R₂Fe₁₄B based nanocomposite magnet has a structure in which the α -Fe phases and R₂Fe₁₄B-type compound phases have substantially the same average crystal grain size and the α - Fe phases have grown excessively. Also, to improve the performance of the nanocomposite magnet, the size of the α-Fe phases needs to be reduced. Thus, a nanocomposite magnet, in which the sizes of the α -Fe phases (i.e., the black portions in portion (c) of FIG. 1) and the R₂Fe₁₄B-type compound phases (i.e., the white portions in portion (c) of FIG. 1) were both reduced uniformly by controlling the conditions of the rapid solidification process and heat treatment process to crystallize the material alloy, was reported as shown in portion (c) of FIG. 1.

Unlike these conventional nanocomposite magnets, the nanocomposite magnet of the present invention has a distinct structure in which R₂Fe₁₄B-type compound phases of a relatively large size and α-Fe phases of a smaller size than the R₂Fe₁₄B-type compound phases coexist and in which Ti-C compound phases with increased Ti and C concentrations are present on the grain boundary between the α -Fe phases and the R₂Fe₁₄B-type compound phases, thus realizing excellent nanocomposite magnet performance. In addition, the nanocomposite magnet of the present invention has a highly uniform and fine structure in which the crystal grains of the α -Fe phase with an average crystal grain size of 1 nm to 50 nm have a standard deviation of 10 nm or less and the crystal grains of the Nd₂Fe₁₄B phase with an average crystal grain size of 5 nm to 100 nm have a standard deviation of 15 nm or less. Such a nanocrystalline structure is realized by not just adding Ti to the alloy but also replacing a predetermined percentage or more of B with C in the material alloy and dispersing the α -Fe phases and R₂Fe₁₄B-type compound phases of very small sizes intentionally in the as-quenched rapidly solidified alloy. That is why the R₂Fe₁₄B-type compound phases grow faster and earlier, the α -Fe phases, smaller than the R₂Fe₁₄B - type compound phases, are dispersed, the Ti-C compound phases precipitate on the grain boundary between the α-Fe phases and the R₂Fe₁₄B-type compound phases, and the resultant magnet has such a highly homogeneous and fine structure.

Hereinafter, preferred embodiments of a nanocomposite magnet according to the present invention will be described.

### Alloy composition

is at least one of the rare-earth metals and includes substantially no La or Ce. If the mole fraction y of R were less than 6 at%, H_{cJ} greater than 400 kA/m could not be achieved and the resultant permanent magnet could not be used actually. On the other hand, if the mole fraction y of R exceeded 10 at%, the α -Fe phase contributing to the magnetization of the magnet would account for 5% or less and the remanence Bᵣ would be 0.9 T or less. For these reasons, the mole fraction y of R is preferably 6 at% to 10 at%, more preferably 7 at% to 10 at%, and even more preferably 8 at% to 9.7 at%.

If the combined mole fraction x of B (boron) and C (carbon) were less than 4 at%, the amorphous forming ability would decrease too significantly to obtain the desired uniform fine metal structure and a remanence Bᵣ of 0.9 T or more could not be achieved. Meanwhile, if the mole fraction x exceeded 10 at%, nucleation of soft magnetic phases such as Fe₃B, Fe_{3.5}B and Fe₂₃B₆ would prevail over α -Fe and it would be difficult to realize a remanence Bᵣ of 0.9 T or more. That is why the mole fraction x is preferably 4 at% to 10 at%, more preferably 5 at% to 9.5 at%, and even more preferably 5.5 at% to 9 at%.

If the percentage q of C that substitutes for a portion of B were less than 5%, improvement of magnetic properties to be achieved by the C substitution could not be realized and no compound phases including Ti and C would be produced. If the percentage q of the substituent C is 5% or more, however, the melt quenching rate range to realize excellent permanent magnet performance can be broadened. That is to say, the unwanted situation where the magnet performance varies significantly with the melt-quenching rate can be avoided and excellent nanocomposite magnets can be mass-produced with good stability. Nevertheless, if the percentage q of the substituent C exceeded 50%, the magnetic properties might deteriorate. That is why the upper limit of the percentage q of the substituent carbon is set to be 50%. To further improve the magnetic properties due to the presence of the Ti-C compound phase, q is preferably 10% to 50%, more preferably 15% to 40%.

The transition metal T, including Fe as an essential element, is the balance of the alloy other than the elements described above. Even if Fe is partially replaced with Co and/or Ni, desired hard magnetic properties are still realizable. However, if more than 50% of Fe were replaced with T, then a remanence Bᵣ of 0.5 T or more could not be achieved. For that reason, the percentage of the substituent T should fall within the range of 0% to 50%.

It should be noted that if Fe is partially replaced with Co, the loop squareness of the demagnetization curve will improve and the Curie temperature of the R₂Fe₁₄B phase will rise to increase the thermal resistance effectively. Also, during the melt-quenching process such as a melt spinning process or a strip casting process, the viscosity of the molten alloy decreases, which stabilizes the melt-quenching process advantageously. The percentage of Fe to be replaced with Co is preferably 0.5% to 15%.

Optionally, at least one additive element M, selected from the group consisting of Al, Si, Ti, V, Cr, Mn, Cu, Zn, Ga, Zr, Nb, Mo, Ag, Hf, Ta, W, Pt, Au and Pb, may be added as well. By adding such an element, the magnetic properties are furthers improvable effectively. In addition, the best heat treatment temperature range can also be expanded. Nevertheless, if the mole fraction n of these elements M exceeded 10 at%, then the magnetization would decrease. Therefore, the mole fraction n of M is preferably 0 at% to 10 at%, more preferably 0.1 at% to 5 at%.

### Melt quenching machine

In a preferred embodiment of the present invention, the molten alloy is brought into contact with the surface of a metallic chill roller, which is spinning at a high velocity, thereby removing heat from the molten alloy and quenching and solidifying the alloy. To bring an appropriate amount of molten alloy into contact with the surface of the chill roller, the molten alloy is preferably fed onto the chill roller trough an orifice, of which the inside diameter is narrowed to about 0.5 mm to several mm.

The molten alloy that has been fed onto the surface of the chill roller is quenched by the chill roller and then leaves the surface of the chill roller, thereby forming a thin-strip rapidly solidified alloy.

In this preferred embodiment, a material alloy is prepared by using a melt quenching machine such as that shown in FIG. 2. The alloy preparation process is performed within an inert atmosphere to prevent the material alloy, which includes a rare-earth element R and Fe that are easily oxidizable, from being oxidized. The inert gas may be either a rare gas of helium or argon, for example, or nitrogen. A rare gas of helium or argon is preferred to nitrogen, because nitrogen reacts with the rare-earth element R relatively easily.

The machine shown in FIG. 2 includes a material alloy melting chamber 1 and a material alloy quenching chamber 2, in which a vacuum or an inert atmosphere is created at an adjustable pressure. Specifically, FIG. 2(a) illustrates an overall arrangement of the machine, while FIG. 2(b) illustrates a part of the machine on a larger scale.

As shown in FIG. 2(a), the melting chamber 1 includes: a melt crucible 3 to melt, at an elevated temperature, a material 20 that has been mixed to have a desired magnet alloy composition; a reservoir 4 with a teeming nozzle 5 at the bottom; and a mixed material feeder 8 to supply the mixed material into the melt crucible 3 while maintaining an airtight condition. The reservoir 4 stores the melt 21 of the material alloy therein and is provided with a heater (not shown) to maintain the temperature of the melt teemed therefrom at a predetermined level.

The quenching chamber 2 includes a rotating chill roller 7 for rapidly quenching and solidifying the melt 21 that has been dripped through the teeming nozzle 5.

In this machine, the atmosphere and pressure inside the melting and quenching chambers 1 and 2 are controllable within prescribed ranges. For that purpose, atmospheric gas inlet ports 1b, 2b and 8b and outlet ports 1a, 2a and 8a are arranged at appropriate positions of the machine. In particular, the gas outlet port 2a is connected to a pump to control the absolute pressure inside the quenching chamber 2 within a range of 0.1 kPa to the normal pressure (i.e., atmospheric pressure).

The melt crucible 3 may define a desired tilt angle to pour the melt 21 through a funnel 6 into the reservoir 4. The melt 21 is heated in the reservoir 4 by the heater (not shown).

The teeming nozzle 5 of the reservoir 4 is positioned on the boundary wall between the melting and quenching chambers 1 and 2 to drip the melt 21 in the reservoir 4 onto the surface of the chill roller 7, which is located under the nozzle 5. The orifice diameter of the teeming nozzle 5 may be 0.5 mm to 2.0 mm, for example. If the viscosity of the melt 21 is high, then the melt 21 cannot flow through the teeming nozzle 5 easily. In this embodiment, however, the pressure inside the quenching chamber 2 is kept lower than the pressure inside the melting chamber 1. Thus, an appropriate pressure difference is created between the melting and quenching chambers 1 and 2, and the melt 21 can be teemed smoothly.

The chill roller 7 preferably includes a base made of carbon steel, tungsten, iron, copper, molybdenum, beryllium or an alloy thereof, because such a base has excellent thermal conductivity and durability. The base of the chill roller 7 preferably has its surface plated with chromium, nickel or a mixture thereof. This is because the surface strength of the roller can be increased and the surface of the roller base can be protected with the coating and will not be melted or damaged while the melt is being quenched. The chill roller 7 may have a diameter of 300 mm to 500 mm, for instance. The water-cooling capability of a water cooler provided inside the chill roller 7 is calculated and adjusted based on the latent heat of solidification and the volume of the melt teemed per unit time.

### Melt quenching process

First, the melt 21 of the material alloy, which is represented by the compositional formula described above, is prepared and stored in the reservoir 4 of the melting chamber 1 shown in FIG. 2. Next, the melt 21 is dripped through the teeming nozzle 5 onto the chill roller 7 to contact with, and be rapidly quenched and solidified by, the chill roller 7 within a low-pressure Ar atmosphere. In this case, an appropriate rapid solidification process, making the quenching rate controllable precisely, should be adopted.

If the single-roller quenching process such as that shown in FIG. 2 is adopted, the quenching rate of the molten alloy is controllable by the roller surface velocity of the chill roller or the volume of the melt to be teemed onto the surface of the chill roller per unit time. If the chill roller has such a structure that makes its temperature adjustable by water cooling, the quenching rate of the molten alloy is also controllable by the flow rate of the cooling water flowing inside the chill roller. That is to say, by adjusting at least one of the roller surface velocity, the volume of the melt teemed and the flow rate of the cooling water depending on the necessity, the quenching rate of the molten alloy can be controlled to the range defined by the present invention.

In this preferred embodiment, in quenching and solidifying the melt 21, the quenching rate of the molten alloy is adjusted to the range of 5 × 10³ °C /s to 5 × 10⁷ °C/s. If the quenching rate were outside of this range, then the effects of improving the magnetic properties, which are enhanced by the effects achieved by substituting C as described above, could not be achieved anymore. To make an even more uniform fine metal structure, the melt-quenching rate is preferably 2 × 10⁴ °C /s to less than 1 × 10⁷ °C/s, even more preferably 1 × 10⁵ °C/s to less than 7 × 10⁶ °C/s.

The period of time during which the molten alloy 21 is quenched by the chill roller 7 is equivalent to an interval between a point in time the alloy contacts with the outer surface of the rotating chill roller 7 and a point in time the alloy leaves the roller 7. In the meantime, the alloy has its temperature decreased to be a supercooled liquid. Thereafter, the supercooled alloy leaves the chill roller 7 and travels within the inert atmosphere. While the thin-strip alloy is traveling, the alloy has its heat dissipated into the atmospheric gas. As a result, the temperature of the alloy further drops. The pressure of the atmospheric gas is preferably 0.1 kPa to the atmospheric pressure. Thus, the alloy can make an even closer contact with the chill roller, and the heat of the alloy can be removed by the chill roller even more effectively, and the Nd₂Fe₁₄B compound can nucleate and grow finely and uniformly in the alloy. More preferably, the pressure of the atmospheric gas is 30 kPa to the atmospheric pressure. Then, the Nd₂Fe₁₄B type compound can nucleate and grow even more uniformly and finely in the alloy. It should be noted that unless an appropriate amount of Ti were added to the material alloy, then the α -Fe phase would nucleate and grow faster and earlier in the rapidly solidified alloy that has gone through the quenching process described above, thus deteriorating the resultant magnetic properties.

In this embodiment, the surface velocity of the roller is adjusted to fall within the range of 7 m/s to 25 m/s and the pressure of the atmospheric gas is set to 1.3 kPa or more, thereby making a rapidly solidified alloy including an R₂Fe₁₄B type compound phase with a very small average crystal grain size of 80 nm or less.

In the preferred embodiment described above, the melt-quenching process is carried out as a melt spinning process using the machine shown in FIG. 2. Alternatively, a process that uses a tundish with a tubular hole as disclosed in Japanese Patent Application Laid-Open Publication No. 2004-122230 (which is called a "nozzle quenching process") can be used effectively as well.

### Heat treatment

In this preferred embodiment, the rapidly solidified alloy is subjected to a heat treatment process within an argon atmosphere. Preferably, the alloy is heated to a temperature of 500 °C to 800 °C at a temperature rise rate of 0.5 °C /s to 7 °C/s, maintained at the temperature of 500 °C to 800 °C for a period of time of 30 seconds to 20 minutes, and then cooled to room temperature.

This heat treatment process results in nucleation and/or growth of very small crystals from an amorphous phase remaining in the rapidly solidified alloy. According to the present invention, the nanocrystalline Nd₂Fe₁₄B phase already accounts for 10 vol% to 90 vol% of the as-cast alloy that has not been thermally treated yet. Thus, α -Fe and other crystalline phases will not increase their sizes too much and the respective constituent phases other than the Nd₂Fe₁₄B phase (i.e., soft magnetic phases) will be dispersed finely and uniformly. After the heat treatment process, the Nd₂Fe₁₄B phase accounts for 65 vol% to 90 vol% of the alloy.

If the heat treatment temperature were lower than 500 °C, then the amorphous phases in the rapidly solidified alloy could not be crystallized and the desired magnetic properties could not be realized. On the other hand, if the heat treatment temperature exceeded 800 °C, the grain growth of the respective crystal grains would advance too much, thus weakening the exchange interactions between the respective magnetic phases and decreasing the remanence Bᵣ to less than 0.9 T. For these reasons, the heat treatment temperature is preferably 550 °C to 780 °C, more preferably 580 °C to 750 °C.

If the temperature rise rate during the heat treatment process for crystallization were either less than 0.5 °C/s or more than 7 °C /s, then no uniform fine metal structure could be obtained and a remanence Bᵣ of 0.9 T or more could not be achieved. That is why the temperature rise rate is preferably 1 °C/s to 7 °C/s, more preferably 1 °C/s to 6 °C/s.

It is not so important how long the alloy should be maintained at the predetermined temperature. However, to carry out a highly reproducible heat treatment process with good stability, the alloy is preferably kept at that temperature for at least 1 minute.

To prevent the alloy from being oxidized, the heat treatment is preferably conducted within an inert gas (e.g., Ar or N₂ gas) atmosphere or an inert gas such as Ar gas or N₂ gas having a pressure of 10 kPa or less. Alternatively, the heat treatment may also be carried out in a vacuum of 0.1 kPa or less.

In the present invention, the Nd₂Fe₁₄B type compound phase can be crystallized uniformly and finely in the rapidly solidified alloy. Accordingly, even if the rapidly solidified alloy were not thermally treated and crystallized, the solidified alloy itself could exhibit good enough magnet properties. That is why the heat treatment for crystallization is not an essential process for the present invention. However, to further improve the magnet performance, the heat treatment is preferably conducted. In addition, even though the heat treatment is carried out at lower temperatures than the conventional process, the magnetic properties can still be improved sufficiently.

According to the present invention, if the α -Fe phase accounted for less than 5 vol% of the resultant nanocomposite magnet, then a remanence Bᵣ of 0.9 T or more could not be achieved. However, if α -Fe accounted for 60 vol% or more of the magnet, then the volume percentage of the Nd₂Fe₁₄B phase contributing to expressing the coercivity would be too low to achieve an H_{cJ} of 400 kA/m or more. To realize good enough magnetic properties, the volume percentage of α-Fe is preferably 7% to 60%, more preferably 10% to 45%. The rest of the nanocomposite magnet alloy, other than the α -Fe, consists mostly of the Nd₂Fe₁₄B phase.

The non-magnetic compound, including at least Ti and C and present on the grain boundary, would contribute to increasing the coercivity H_{cJ} while maintaining high Br and good loop squareness of demagnetization curve by adjusting the exchange interactions between the respective constituent phases of the nanocomposite structure. The grain boundary may further include a Ti-B compound. As another soft magnetic phase that realizes magnetization, an iron-based boride based ferromagnetic phase such as Fe₃B may also be included. If the amorphous phases remaining after the heat treatment process accounts for less than 5%, those amorphous phases do not affect the magnetic properties and are not a problem. However, if the amorphous phases accounted for 5% or more, the magnetization would drop significantly, which is not beneficial.

If the α -Fe had an average crystal grain size greater than 50 nm, then the number of α -Fe crystal grains, which are multi-axis crystals, would increase, and therefore, a remanence Bᵣ of 0.9 T or more could not be achieved. Meanwhile, it is virtually impossible to produce α-Fe with an average crystal grain size of less than 1 nm in an alloy according to the present invention. For these reasons, the average crystal grain size of α -Fe is preferably 1 nm to 30 nm, more preferably 1 nm to 20 nm. It should be noted that if the crystal grains of α-Fe had a standard deviation of 10 nm or more, then no uniform fine structure could be obtained and the exchange interactions acting on the respective particles would decrease as a whole. As a result, the remanence Bᵣ and the loop squareness of the demagnetization curve would both decrease. That is why the standard deviation of the crystal grain sizes is preferably 8 nm or less, more preferably 6 nm or less.

Also, if the average crystal grain size of the Nd₂Fe₁₄B phase were less than 5 nm, a coercivity H_{cJ} of 400 kA/m or more could not be achieved. On the other hand, if the average crystal grain size of the Nd₂Fe₁₄B phase were more than 100 nm, then a remanence Bᵣ of 0.9 T or more could not be achieved. For these reasons, the average crystal grain size of the Nd₂Fe₁₄B phase is preferably 10 nm to 70 nm, more preferably 10 nm to 50 nm. Furthermore, if the standard deviation of the crystal grain sizes of the Nd₂Fe₁₄B phase were 15 nm or more, then no uniform fine structure could be obtained and the exchange interactions acting on the respective particles would decrease as a whole. As a result, the remanence Bᵣ and the loop squareness of the demagnetization curve would both decrease. That is why the standard deviation of the crystal grain sizes of the Nd₂Fe₁₄B phase is preferably 13 nm or less, more preferably 10 nm or less.

It should be noted that the thin strip of the rapidly solidified alloy could be coarsely cut or coarsely pulverized before subjected to the heat treatment. When the heat treatment is finished, the resultant magnet is finely pulverized to make a magnet powder. Then, various types of bonded magnets can be made from this magnet powder by performing known process steps on the powder. In making a bonded magnet, the magnet powder of the iron-based rare-earth alloy is mixed with epoxy, polyamide, polyphenylene sulfide (PPS), liquid crystal polymer, acrylic resin, or polyether and then molded into a desired shape. In this case, a magnet powder of any other type (e.g., an Sm-Fe-N based magnet powder or hard ferrite magnet powder) may be mixed with the nanocomposite magnet powder.

Using this bonded magnet, motors, actuators and various other rotating machines can be produced.

Where the magnet powder of the present invention is used to make an injection-molded bonded magnet, the powder is preferably pulverized to have a mean particle size of 200 µm or less, more preferably from 30 µm to 150 µm. On the other hand, where the magnet powder is used to make a compacted bonded magnet, the powder is preferably pulverized to have a mean particle size of 300 µm or less, more preferably from 30 µm to 250 µm and even more preferably from 50 µm to 200 µm with a bimodal size distribution.

It should be noted that if the powder is subjected to a surface treatment (e.g., coupling treatment, conversion coating or plating), then the powder to make a bonded magnet can have its compactibility improved, no matter how the powder needs to be compacted. In addition, the resultant bonded magnet can have its anticorrosiveness and thermal resistance both increased. Alternatively, after a bonded magnet has been once formed by compacting the powder into a desired shape, the surface of the magnet may also be treated, e.g., covered with a resin or conversion coating or plated. This is because anticorrosiveness and thermal resistance of the bonded magnet can also be improved as in the situation where the powder is subjected to the surface treatment.

Hereinafter, specific examples of the present invention will be described.

### Examples

30 g of material, in which respective elements Nd, Pr, B, C, Ti, Co, Zr, V and Fe, each having a purity of 99.5% or more, were mixed together so as to have any of the compositions shown in the following Table 1, was put into a nozzle of transparent quartz. This nozzle had an orifice with a diameter φ of 0.8 mm at the bottom, under which a rotating chill roller was arranged.

Thereafter, the material in the nozzle was melted by an induction heating process within an Ar atmosphere, thereby preparing a molten alloy. After the temperature of the melt had reached 1,400 °C, the surface of the melt was pressurized at 30 kPa, thereby ejecting the molten alloy through the orifice at the bottom of the nozzle onto the surface of the roller. The surface velocity of the chill roller was adjusted to any of the values shown in Table 1. The molten alloy that had contacted with the surface of the chill roller was quenched by the chill roller, thereby forming a thin-strip rapidly solidified alloy.

The melt quenching rates shown in Table 1 were calculated based on the values that had been obtained using infrared cameras Thermal Vision LAIRD 3ASH and LAIRD S270A produced by Nikon Corporation.

As a result of a power XRD analysis, it was confirmed that the resultant rapidly solidified alloy had a rapidly solidified alloy structure including amorphous phases and crystalline phases that were believed to be Nd₂Fe₁₄B and α-Fe phases.

The resultant thin-strip alloy was cut to a length of about 20 mm and then thermally treated and crystallized in an Ar atmosphere. The conditions of the heat treatment process that was carried out on each sample are also shown in Table 1. That is to say, each sample was heated at its associated temperature rise rate shown in Table 1 and then maintained at its associated heat treatment temperature for ten minutes shown in Table 1.

After the thin-strip rapidly solidified alloy had been thermally treated and crystallized, the crystalline phases of the alloy were analyzed by a powder XRD analysis. As a result, a structure including Nd₂Fe₁₄B and α-Fe phases was identified. In some samples, iron-based boride phases such Fe₃B and Fe₂₃B₆ were also identified. The present inventors observed the fine metal structure using a transmission electron microscope. As a result, it was confirmed that a nanocomposite magnet structure, including an Nd₂Fe₁₄B phase with an average crystal grain size of 20 nm to 100 nm and an α -Fe phase that was present on the grain boundary of the Nd₂Fe₁₄B phase, had been formed. The grain boundary portions had a thickness of several nm to about 20 nm.

In addition, a compound including Ti and C was also detected on the grain boundary between the α-Fe phases (or iron-based boride phases) and the Nd₂Fe₁₄B phases. However, this compound was not identifiable because its size was 10 nm or less.

The magnetic properties of the thermally treated and crystallized thin-strip rapidly solidified alloys were evaluated at room temperature using a vibrating sample magnetometer. The results are shown in Table 2. The crystal grain sizes of the Nd₂Fe₁₄B and α-Fe phases and their standard deviations are also shown in Table 2. The standard deviation of the crystal grain sizes of each phase was figured out in the following manner. An intermediate portion of the thin-strip rapidly solidified alloy in the thickness direction was observed with a transmission electron microscope (TEM). The grain sizes of the crystal grains, which were presumed to be the Nd₂Fe₁₄B and α-Fe phases, were measured on 50 spots per phase, and their standard deviations were calculated based on the sizes measured.

### Comparative Example

The respective elements Nd, Pr, B, C, Ti and Fe were mixed together so as to have any of the alloy compositions Nos. 9 through 12 shown in the following Table 1, and then a thin-strip rapidly solidified alloy was made by the same method as in the specific example described above. The resultant alloy thin strip was thermally treated and crystallized as in the specific example, too. The conditions of the melt-quenching process and the heat treatment process are as shown in Table 1.

The crystalline phases of the thermally treated and crystallized thin-strip rapidly solidified alloy were analyzed by a powder XRD analysis. As a result, a structure consisting of an Nd₂Fe₁₄B phase and an a -Fe phase was identified. In some samples, iron-based boride phases such as Fe₃B and Fe₂₃B₆ were also identified.

the magnetic properties of the thermally treated and crystallized thin-strip rapidly solidified alloy were evaluated at room temperature using a vibrating sample magnetometer. The results are shown in the following Table 2. The crystal grain sizes of the Nd₂Fe₁₄B and α-Fe phases and their standard deviations are also shown in Table 2.

**Table 1**

| | | Alloy composition (at%) | Roller surface velocity (m/s) | Melt quenching rate (°C/s) | Temp. rise rate (°C/s) | Heat treatment temp. (°C) |
|---|---|---|---|---|---|---|
| E X A M P L E S | 1 | Nd₉Fe₈₂ (B_{0.9}C₀.₁)₇Ti₂ | 16 | 1×10⁶ | 4.3 | 680 |
| | 2 | Pr₂Nd₇Fe₈₄(B_{0.0}C_{0.2})₆Ti₁ | 17 | 3×10⁶ | 2.2 | 670 |
| | 3 | Nd₈Fe_{82.5} (B_{0.}C_{0.3})₈Ti_{1.5} | 15 | 7×10⁵ | 3.0 | 700 |
| | 4 | Pr₄Nd_{.5}Fe₈₂(B_{0.6}C_{0.4})₇Ti₂ | 16 | 1×10⁶ | 1.5 | 660 |
| | 5 | Nd_{9.5}F₇₆CO₃(B_{0.8}C_{0.2})₉Ti_{2.5} | 15 | 7×10⁵ | 3.0 | 670 |
| | 6 | Nd₉Fe₈₄(B_{0.75}C_{0.25})₆Ti₁ | 17 | 3×10⁶ | 6.5 | 690 |
| | 7 | Nd_{9.5}Fe_{75.5}Co₅(B_{0.8}C_{0.2})₇Zr₁ | 14 | 2×10⁵ | 4.3 | 720 |
| | 8 | Nd₉Fe_{79.5} (B_{0.8}C_{0.2})₈Ti₃V_{0.5} | 16 | 1×10⁶ | 4.3 | 720 |
| C O M P | 9 | Nd₉Fe₈₂B₁ | 25 | 2×10⁷ | 3.0 | 700 |
| | 10 | Pr₄Nd_{.5}Fe₈₂B₇Ti₂ | 18 | 4×10⁶ | 6.5 | 690 |
| | 11 | Nd_{9.5}F_{78.5}Co₃(B_{0.8}C_{0.2})₉ | 16 | 1×10⁶ | 4.3 | 710 |
| | 12 | Nd_{9.5}Fe_{76.5}Co₅(B_{0.8}C_{0.2})₇Zr₂ | 14 | 2×10⁵ | 4.3 | 720. |
| | 13 | Nd₉Fe₈₂ (B_{0.9}C_{0.1})₇Ti₂ | 6 | 1×10³ | 3.0 | 700 |
| | 14 | Nd₉Fe₈₂ (B_{0.9}C_{0.1})₇Ti₂ | 28 | 8×10⁸ | 6.5 | 690 |

**Table 2**

| | | Bᵣ (T) | (BH)ₘₐₓ (kJ/m³) | H_{cJ} (kA/m) | Nd₂Fe₁₄B crystal grain size (nm) | | α-Fe crystal grain size (nm) | |
|---|---|---|---|---|---|---|---|---|
| | | | | | Av. | SD | Av. | SD |
| E X A M P L E S | 1 | 1.02 | 133 | 561 | 37 | 11 | 20 | 7 |
| | 2 | 1.07 | 128 | 516 | 40 | 14 | 18 | 6 |
| | 3 | 1.05 | 124 | 522 | 42 | 14 | 20 | 7 |
| | 4 | 1.03 | 130 | 627 | 35 | 11 | 20 | 5 |
| | 5 | 0.95 | 135 | 670 | 38 | 12 | 20 | 8 |
| | 6 | 1.10 | 140 | 452 | 26 | 9 | 17 | 5 |
| | 7 | 0.97 | 144 | 751 | 24 | 7 | 20 | 6 |
| | 8 | 1.03 | 128 | 705 | 35 | 11 | 20 | 8 |
| C O M P | 9 | 1.02 | 94 | 198 | 30 | 15 | 30 | 10 |
| | 10 | 0.89 | 111 | 616 | 40 | 15 | 20 | 10 |
| | 11 | 0.95 | 103 | 350 | 50 | 20 | 30 | 15 |
| | 12 | 0.80 | 98 | 710 | 40 | 20 | 40 | 15 |
| | 13 | 0.71 | 34 | 327 | 30 | 15 | 200 | 50 |
| | 14 | 0.87 | 101 | 481 | 40 | 20 | 30 | 15 |

### INDUSTRIAL APPLICABILITY

The iron-based rare-earth nanocomposite magnet of the present invention exhibits high remanence and high coercivity, and therefore, can be used extensively in various types of industrial machines such as motors and sensors.

## Claims

1. An iron-based rare-earth nanocomposite magnet comprising an Nd₂Fe₁₄B phase and an α -Fe phase and having a composition represented by the compositional formula:
T_{100-x-y-z-n}(B_{1-q}C_{q})ₓR_{y}TᵢMₙ, where T is at least one transition metal element selected from the group consisting of Fe, Co and Ni and always including Fe, R is at least one rare-earth element including substantially no La or Ce, and M is at least one metal element selected from the group consisting of Al, Si, V, Cr, Mn, Cu, Zn, Ga, Zr, Nb, Mo, Ag, Hf, Ta, W, Pt, Au and Pb, and the mole fractions x, y, z, n and q satisfy the inequalities of:
4 at%≦×≦10 at%,
6 at%≦y≦10 at%,
0.05 at%≦z≦5 at%,
0 at%≦n≦10 at%, and
0.05≦q≦0.5, respectively,
wherein the magnet includes 5 vol% to 60 vol% of α-Fe phase with an average crystal grain size of 1 nm to 50 nm and 40 vol% to 90 vol% of Nd₂Fe₁₄B phase with an average crystal grain size of 5 nm to 100 nm, and
wherein a non-magnetic phase including at least Ti and C (carbon) is present on the grain boundary between the α-Fe and Nd₂Fe₁₄B phases.

2. The iron-based rare-earth nanocomposite magnet of claim 1, wherein the α -Fe phase with the average crystal grain size of 1 nm to 50 nm has a crystal grain size standard deviation of 10 nm or less and the Nd₂Fe₁₄B phase with the average crystal grain size of 5 nm to 100 nm has a crystal grain size standard deviation of 15 nm or less.

3. A method for producing an iron-based rare-earth nanocomposite magnet that includes an Nd₂Fe₁₄B phase and an α-Fe phase, the method comprising the steps of:
preparing a melt of an alloy that has a composition represented by the compositional formula:
T100-x-y-z-n(B_{1-q}C_{q})ₓR_{y}Ti_{z}Mₙ, where T is at least one transition metal element selected from the group consisting of Fe, Co and Ni and always including Fe, R is at least one rare-earth element including substantially no La or Ce, and M is at least one metal element selected from the group consisting of Al, Si, V, Cr, Mn, Cu, Zn, Ga, Zr, Nb, Mo, Ag, Hf, Ta, W, Pt, Au and Pb, and the mole fractions x, y, z, n and q satisfy the inequalities of:
4 at%≦x≦10 at%,
6 at%≦y≦10 at%,
0.05 at%≦z≦5 at%,
0 at%≦n≦10 at%, and
0.05≦q≦0.5, respectively; and
quenching the melt at a quenching rate of 5×10³ °C/s to 5×10⁷ °C/s, thereby making a rapidly solidified alloy, which includes at least 10% of crystalline phases including the Nd₂Fe₁₄B phase and the a -Fe phase and having an average crystal grain size of 100 nm or less and an amorphous phase as the balance.

4. The method of claim 3, further comprising the step of thermally treating and crystallizing the rapidly solidified alloy by heating the alloy to a temperature of 500 °C to 800°C at a rate of 0. 5 °C/s to 7 °C/s after the step of quenching the melt has been performed.

5. The method of claim 3, further comprising the step of pulverizing the rapidly solidified alloy after the step of quenching the melt has been performed.

6. The method of claim 3, wherein the alloy satisfies 8 at%≦y≦10 at%.

7. A method for producing a resin bonded permanent magnet, comprising the steps of:
preparing a magnet powder by the method of claim 5; and adding a resin binder to the magnet powder and molding the powder and the binder.

## Patentansprüche

1. Seltene Erden enthaltender Nanokomposit-Magnet auf Eisenbasis umfassend eine Nd₂Fe₁₄B-Phase und eine α-Fe-Phase und mit einer Zusammensetzung dargestellt durch die Zusammensetzungsformel:
T_{100-x-y-z-n}(B_{1-q}C_{q})ₓR_{y}Ti_{z}Mₙ, wobei T wenigstens ein Übergangsmetallelement ist, gewählt aus der Gruppe bestehend aus Fe, Co und Ni und immer enthaltend Fe, R wenigstens ein Seltenerdmetall ist, das im Wesentlichen kein La oder Ce enthält, und M wenigstens ein Metallelement ist, gewählt aus der Gruppe bestehend aus Al, Si, V, Cr, Mn, Cu, Zn, Ga, Zr, Nb, Mo, Ag, Hf, Ta, W, Pt, Au und Pb, und wobei die Molanteile x, y, z, n und q die Ungleichungen erfüllen:
4 Atom-% ≤x≤10 Atom-%,
6 Atom-% ≤ y ≤ 10 Atom-%,
0,05 Atom-% ≤ z ≤ 5 Atom-%,
0 Atom-% ≤ n ≤10 Atom-%, und
0,05 ≤ q ≤ 0,5,
wobei der Magnet 5 vol% bis 60 vol% einer α-Fe-Phase mit einer mittleren Kristallkorngröße von 1 nm bis 50 nm enthält und 40 vol% bis 90 vol% der Nd₂Fe₁₄B-Phase mit einer mittleren Kristallkorngröße von 5 nm bis 100 nm, und
wobei eine nicht magnetische Phase, die wenigstens Ti und C (Kohlenstoff) enthält, an den Korngrenzen zwischen der α-Fe und der Nd₂Fe₁₄B-Phase vorhanden ist.

2. Seltene Erden enthaltender Nanokomposit-Magnet auf Eisenbasis nach Anspruch 1, wobei die α-Fe Phase mit der mittleren Kristallkorngröße von 1 nm bis 50 nm eine Standardabweichung der Kristallkorngrößen von 10 nm oder weniger aufweist und die Nd₂Fe₁₄B-Phase mit der mittleren Kirstallkorngröße von 5 nm bis 100 nm eine Standardabweichung der Kristallkorngröße von 15 nm oder weniger aufweist.

3. Verfahren zur Herstellung eines seltene Erden enthaltenden Nanokomposit-Magneten auf Eisenbasis, welcher eine Nd₂Fe₁₄B-Phase und eine α-Fe-Phase umfasst, wobei das Verfahren die Schritte umfasst:
Herstellung einer Schmelze aus einer Legierung, welche eine Zusammensetzung aufweist, dargestellt durch die Zusammensetzungsformel:
T_{100-x-y-z-n}(B_{1-q}C_{q})ₓR_{y}Ti_{z}Mₙ, wobei T wenigstens ein Übergangsmetall ist, gewählt aus der Gruppe bestehend aus Fe, Co und Ni und immer enthaltend Fe, R wenigstens ein Seltenerdmetall ist, das im Wesentlichen kein La oder Ce enthält, und M wenigstens ein Metallelement ist, gewählt aus der Gruppe bestehend aus Al, Si, V, Cr, Mn, Cu, Zn, Ga, Zr, Nb, Mo, Ag, Hf, Ta, W, Pt, Au und Pb, und wobei die Molanteile x, y, z, n und q die Ungleichungen erfüllen:
4 Atom-% ≤ x ≤ 10 Atom-%,
6 Atom-% ≤ y ≤ 10 Atom-%,
0,05 Atom-% ≤ z ≤ 5 Atom-%,
0 Atom-% ≤ n ≤ 10 Atom-%, und
0,05 ≤ q ≤ 0,5, und
Abschrecken der Schmelze mit einer Abschreckgeschwindigkeit von 5x10³ °C/s bis 5x10⁷ °C/s, wodurch eine schnell verfestigte Legierung hergestellt wird, welche wenigstens 10 % an kristallinen Phasen enthält, einschließlich der Nd₂Fe₁₄B-Phase und der α-Fe-Phase, und eine mittlere Kristallkorngröße von 100 nm oder weniger und eine amorphe Phase als Rest aufweist.

4. Verfahren nach Anspruch 3, des weiteren umfassend den Schritt des thermischen Behandelns und Kristallisierens der schnell verfestigten Legierung durch Erwärmen der Legierung auf eine Temperatur von 500 °C bis 800 °C mit einer Geschwindigkeit von 0,5 °C/s bis 7° C/s, nachdem der Schritt des Abschreckens der Schmelze durchgeführt wurde.

5. Verfahren nach Anspruch 3, des weiteren umfassend den Schritt des Pulverisierens der schnell verfestigten Legierung, nachdem der Schritt des Abschreckens der Schmelze durchgeführt wurde.

6. Verfahren nach Anspruch 3, wobei die Legierung 8 Atom-% ≤ y ≤ 10 Atom-% erfüllt.

7. Verfahren zur Herstellung eines harzgebundenen Dauermagneten, umfassend die Schritte:
Herstellen eines Magnetpulvers durch das Verfahren nach Anspruch 5; und Zugeben eines Harzbindemittels zu dem Magnetpulver und Formen des Pulvers und des Bindemittels.

## Revendications

1. Aimant nanocomposite à terre rare à base de fer comprenant une phase Nd₂Fe₁₄B et une phase α-Fe et ayant une composition représentée par la formule de composition :
T_{100-x-y-z-n} (B_{1-q}C_{q})ₓR_{y}Ti_{z}Mₙ, où T est au moins un élément des métaux de transition choisi dans le groupe constitué par Fe, Co et Ni et incluant toujours Fe, R est au moins un élément des terres rares n'incluant essentiellement pas La ou Ce, et M est au moins un élément métallique choisi dans le groupe constitué par Al, Si, V, Cr, Mn, Cu, Zn, Ga, Zr, Nb, Mo, Ag, Hf, Ta, W, Pt, Au et Pb, et les fractions molaires x, y, z, n et q satisfont aux inéquations de :
4 % at x ≤ 10 % at,
6 % at ≤ y ≤ 10 % at,
0,05 % at ≤ z ≤ 5 % at,
0 % at n ≤ 10 % at, et
0,05 ≤ q ≤ 0,5, respectivement,
dans lequel l'aimant inclut 5 % en vol à 60 % en vol de phase α-Fe ayant une taille moyenne de grain cristallin de 1 nm à 50 nm et 40 % en vol à 90 % en vol de phase Nd₂Fe₁₄B ayant une taille moyenne de grain cristallin de 5 nm à 100 nm, et
dans lequel une phase non magnétique incluant au moins Ti et C (carbone) est présente sur le joint de grain entre les phases α-Fe et Nd₂Fe₁₄B.

2. Aimant nanocomposite à terre rare à base de fer selon la revendication 1, dans lequel la phase α-Fe ayant une taille moyenne de grain cristallin de 1 nm à 50 nm a un écart type de taille de grain cristallin de 10 nm ou moins et la phase Nd₂Fe₁₄B ayant une taille moyenne de grain cristallin de 5 nm à 100 nm a un écart type de taille de grain cristallin de 15 nm ou moins.

3. Procédé pour fabriquer un aimant nanocomposite à terre rare à base de fer qui inclut une phase Nd₂Fe₁₄B et une phase α-Fe, le procédé comprenant les étapes consistant :
à préparer une masse fondue d'un alliage qui a une composition représentée par la formule de composition :
T_{100-x-y-z-n (}B_{1-q}C_{q})ₓR_{y}Ti_{z}Mₙ, où T est au moins un élément des métaux de transition choisi dans le groupe constitué par Fe, Co et Ni et incluant toujours Fe, R est au moins un élément des terres rares n'incluant essentiellement pas La ou Ce, et M est au moins un élément métallique choisi dans le groupe constitué par Al, Si, V, Cr, Mn, Cu, Zn, Ga, Zr, Nb, Mo, Ag, Hf, Ta, W, Pt, Au et Pb, et les fractions molaires x, y, z, n et q satisfont aux inéquations de :
4 % at x ≤ 10 % at,
6 % at ≤ y ≤ 10 % at,
0,05 % at ≤ z ≤ 5 % at,
0 at ≤ n ≤ 10 % at, et
0,05 ≤ q ≤ 0,5, respectivement ; et
à refroidir brusquement la masse fondue à une vitesse de refroidissement de 5 x 10³ °C/s à 5 x 10⁷°C/s, formant ainsi un alliage rapidement solidifié, qui inclut au moins 10 % de phases cristallines incluant la phase Nd₂Fe₁₄B et la phase α-Fe et ayant une taille moyenne de grain cristallin de 100 nm ou moins et une phase amorphe en tant que le reste.

4. Procédé selon la revendication 3, comprenant en outre l'étape consistant à traiter thermiquement et à cristalliser l'alliage rapidement solidifié en chauffant l'alliage à une température de 500 °C à 800 °C à une vitesse de 0,5 °C/s à 7 °C/s après avoir effectué l'étape consistant à refroidir brusquement la masse fondue.

5. Procédé selon la revendication 3, comprenant en outre l'étape consistant à pulvériser l'alliage rapidement solidifié après avoir effectué l'étape consistant à refroidir brusquement la masse fondue.

6. Procédé selon la revendication 3, dans lequel l'alliage satisfait à 8 % at ≤ y ≤ 10 % at.

7. Procédé pour fabriquer un aimant permanent lié par une résine, comprenant les étapes consistant : à préparer une poudre d'aimant par le procédé de la revendication 5 ; et à ajouter un liant de résine à la poudre d'aimant et à mouler la poudre et le liant.
